Europäisches Patentamt

(19) European Patent Office

Office européen des brevets

(11) Publication number: **0 058 475**
**A1**

## (12) EUROPEAN PATENT APPLICATION

(21) Application number: **82300345.4**

(22) Date of filing: **22.01.82**

(51) Int. Cl.³: **F 16 F 15/26**
**G 01 M 1/36**

(30) Priority: **22.01.81 GB 8101949**

(43) Date of publication of application:
**25.08.82 Bulletin 82/34**

(84) Designated Contracting States:
**DE FR GB IT**

(71) Applicant: **NATIONAL RESEARCH DEVELOPMENT CORPORATION**
**P.O. Box 236 Kingsgate House 66-74 Victoria Street**
**London SW1E 6SL(GB)**

(72) Inventor: **Mitchell, Stephen William**
**93 Lowercroft Road**
**Bury Lancashire BL8 2ER(GB)**

(74) Representative: **Allman, Peter John**
**MARKS AND CLERK 7th Floor Scottish Life House**
**Bridge Street**
**Manchester M3 3DP(GB)**

(54) **Improvements in engine balancing.**

(57) A system for balancing primary and secondary forces resulting from the reciprocation of an element of a mechanism connected to a crankshaft, for example, the piston of an internal combustion engine. The system comprises at least one balance weight (18, 19) rotatable about a fixed axis and means for rotating said at least one balance weight (18, 19) about said fixed axis at an angular velocity related to the angular velocity of the crankshaft (1). The angular velocity of said at least one balance weight (18, 19) relative to the angular velocity of the crankshaft (1) is varied by an eccentric mechanism during the course of each revolution of the crankshaft (1) such that the centrifugal force generated by said at least one balance weight (18, 19) varies to substantially reduce or eliminate vibrations due to primary and secondary forces.

COMPLETE DOCUMENT

FIG 1

0058475

The present invention relates to a system for balancing primary and secondary forces resulting from the recriprocation of an element of a mechanism. As such the present invention is of particular use in balancing the primary and secondary forces in single cylinder and in-line twin cyclinder engines.

The problem of balancing the primary and secondary forces in single cylinder and in-line twin cylinder engines is well known. In such engines the primary forces are due to the inertia force of the piston which reaches a maximum at the top dead centre and the bottom dead centre positions of the piston in the cylinder, and the secondary forces are due to the angular acceleration of the connecting rod which reaches a maximum at the top dead centre, the bottom dead centre, and the mid positions of the piston in the cylinder.

In order to balance the primary forces in the engine it is well known to use contra-rotating balance shafts rotating at engine speed. However in both single cylinder and in-line twin cylinder engines, the secondary forces still remain unbalanced. In the case of an in-line twin cylinder engine, the secondary forces of each cylinder act in unison irrespective of whether the crank throws are arranged at 180 degrees or 360 degrees. Since the secondary forces act in unison and at a frequency of twice the engine speed, the vibrations produced by the secondary forces

3.

are substantial in magnitude and objectionable in 0058475 practice, particularly in the case of large capacity twin cylinder engines. A road test of a motorcycle fitted with a 400cc twin cylinder engine embodying twin primary balance shafts stated that cruising at· 70 mph was tiresome because of tingling through the handlebars.

It is not practical to have an additional pair of balance shafts rotating at twice engine speed to balance the secondary forces because of the expense of two such shafts together with the physical difficulty of providing room in the engine to accommodate them.

In order to balance the secondary forces in a twin cylinder engine having its cranks arranged at 180 degrees for primary force balance it is known to provide a secondary force balance shaft rotating at twice engine speed. This layout, however, gives primary force couples at top dead centre, bottom dead centre and also at the mid positions. A road test of a machine fitted with this type of engine has shown it to suffer from high frequency vibrations which occurred at any speed above 52 mph. In fact this system offers no improvement when used in twin cylinder engines over the aforementioned design which uses twin primary force balance shafts. In addition this system has been specifically designed for a twin cylinder engine and has to be regarded as being of little use in a single cylinder engine.

It is an object of the present invention to provide an improved primary balance shaft system which also substantially eliminates the vibrations· produced by the secondary forces.

According to the present invention there is provided a system for balancing primary and secondary forces resulting from the reciprocation of an element of a mechanism connected to a crankshaft, comprising at least one balance weight rotatable about a fixed axis and means for rotating said at least one balance weight about said fixed axis at an angular velocity related to the angular velocity of the crankshaft, characterised in that said rotating means is adapted to vary the angular velocity of said at least one balance weight relative to the angular velocity of the crankshaft during the course of each revolution of the crankshaft such that the centrifugal force generated by said at least one balance weight varies to substantially reduce or eliminate vibrations due to primary and secondary forces.

Preferably the or each balance weight is rotated by an eccentric drive mechanism which is itself driven from the crankshaft.

Preferably said eccentric mechanism comprises a drive gear which is linked to the balance weight, the rotational axis of the drive gear and the balance weight being eccentric.

The drive gear may drive the balance weight through a pivotal link.

The reciprocally operating mechanism may consist of an internal combustion engine such as a single cylinder or a twin cylinder engine.

According to a further aspect of the present invention there is provided a method for balancing both primary and secondary forces resulting from the reciprocation of an element of a mechanism connected to a crankshaft, wherein at least one balance weight is rotated at an angular velocity related to the angular velocity of the crankshaft to provide a balancing centrifugal force, characterised in that the angular velocity of the said at least one balance weight is varied relative to the angular velocity of the crankshaft during the course of each revolution of the crankshaft to provide a centrifugal force the magnitude and direction of which varies to substantially reduce or eliminate vibrations due to primary and secondary forces.

An embodiment of the present invention will now be described, by way of example, with reference to the accompanying drawings, in which :

Fig. 1 is a sectional view of a single cylinder engine having two balance weights and embodying the invention, although the layout of an in-line twin cylinder engine is the same;

Fig. 2 is an enlarged sectional view along the line II-II of Fig. 1 showing one of the balance weights and its associated eccentric drive mechanism;

Fig. 3 is a schematic view of the system with the piston at top dead centre;

Fig. 4 is a schematic view of the system with the piston at the mid way position to which the piston moves from top dead centre;

Fig. 5 is a schematic view of the system with the piston at bottom dead centre;

Fig. 6 is a schematic view of the system with the piston at the mid way position to which the piston moves from bottom dead centre;

Fig. 7 shows a graph of the balancing force which results from the centripetal and tangential accelerations of the balance weights for various crankshaft positions; and

Figs. 8 to 11 illustrate an embodiment of the invention having a single balance weight, the relative positions of the crankshaft and the balance weight being shown respectively in the top dead centre position, the subsequent mid way position, the bottom dead centre position, and the subsequent mid way position.

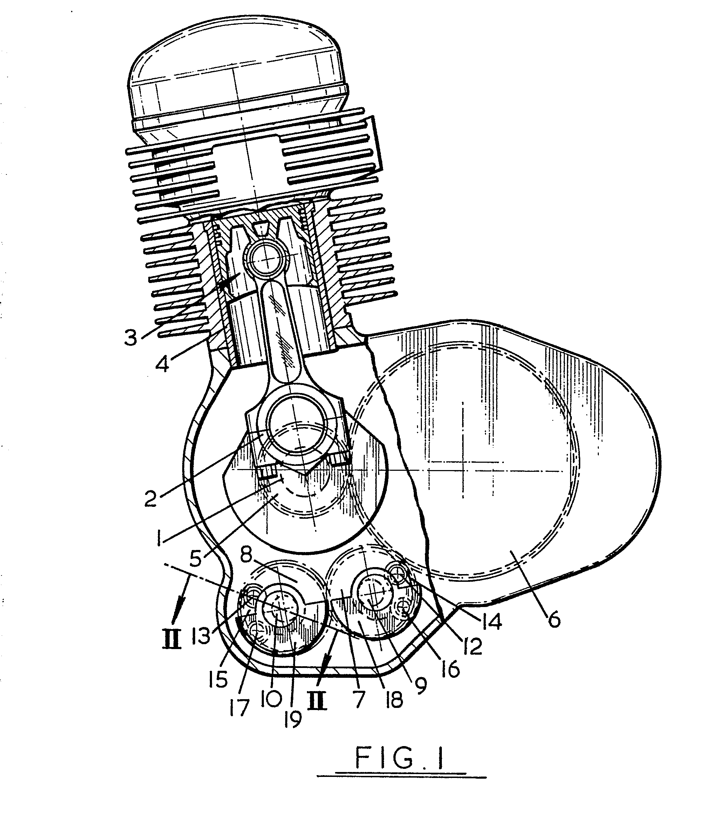

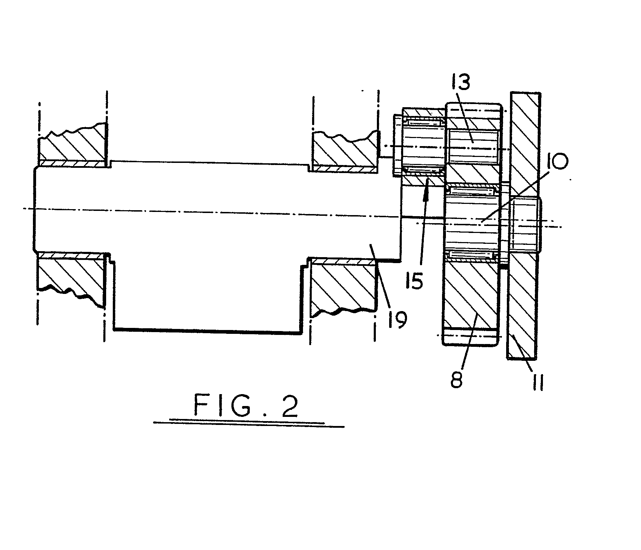

Referring to Fig. 1 there is shown an engine having a crankshaft 1, a connecting rod 2, a piston 3 and a cylinder 4. A gear 5 attached to the crankshaft 1 drives a gear 6 which in turn drives a gear 7 which meshes with gear 8. Gears 7 and 8 are supported on studs 9 and 10 respectively which are attached to a plate 11 (shown in Fig. 2) which is supported on bosses (not shown) cast into the crankcase. Gear 7 has a pin 12 and gear 8 has a pin 13 to which are attached links 14 and 15 respectively. Links 14 and 15 are attached by means of pins 16 and 17 to balance weights 18 and 19 respectively which are rotatably supported on respective balance shafts extending parallel to the crankshaft axis. The centres of gears 7 and 8 are eccentric to the axes of rotation of the balance weights 18 and 19. This eccentricity causes the balance weights to rotate at variable angular velocity relative to the crankshaft 1.

Fig. 2 shows an enlarged sectional view along the line II-II of Fig. 1 through the balance weight 19 and its eccentric drive mechanism for a single cylinder engine. The parts shown in Fig. 2 have the same reference numerals as the corresponding parts in Fig. 1.

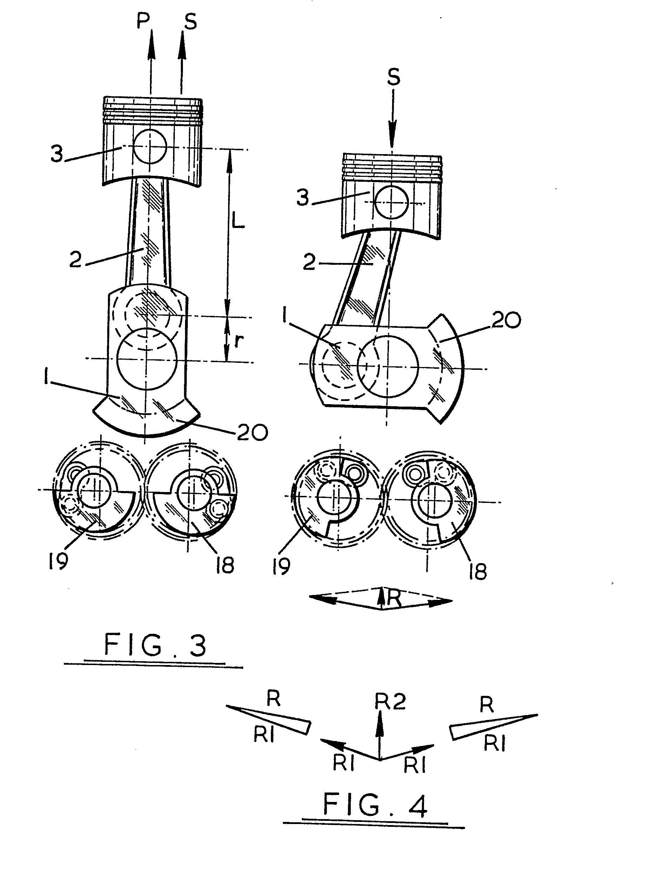

The operation of the eccentrically driven balance weights to balance the primary and secondary forces will now be described with reference to Figs. 3 to 6.

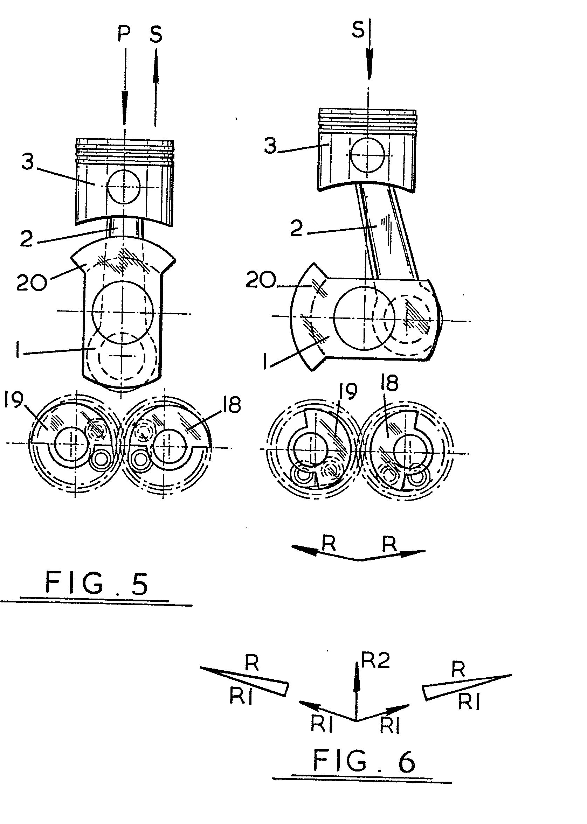

When the piston 3 is at the top dead centre position as shown in Fig. 3 both the primary and secondary forces, arrows P and S respectively, are acting upwards. When the piston 3 reaches the mid position as shown in Fig. 4 the primary force is zero, but the secondary force S is acting downwards. When the piston is at the bottom dead centre position as shown in Fig. 5 the primary force P is acting downwards but the secondary force S is acting upwards. Finally in the mid position shown in Fig. 6 the primary force is zero and the secondary force S is acting downwards. The cycle is then repeated.

The figures used in the following explanation of the operation of the balance weights are based on the assumption that the ratio of the lengths r to l shown in Fig. 3 is 1 to 4, in which case the secondary force is approximately a quarter of the primary force. In addition a balance weight 20 is rigidly connected to the crankshaft 1 and has a weight and shape such that its effect is just sufficient to balance the rotating mass, i.e. substantially the connecting rod big end, and the crankpin to which the big end is connected. Finally, the two balance weights 18 and 19 are identical and are of a size and weight such that if driven continuously at the same angular velocity as the crankshaft their combined effect would balance the reciprocating mass of the piston and connecting rod, that is the primary force P.

Referring now again to Fig. 3 the piston 3 is at the top dead centre and the balance weights 18 and 19 are acting downwards. The balance weights when in the position shown are driven by the eccentric mechanism at an angular velocity approximately 1.12 times the angular velocity of the crankshaft which means that, as the centrifugal force is a function of the square of the angular velocity, the centrifugal force is increased to approximately 1.25 times what it would be if the angular velocity were the same as that of the crankshaft. This produces a downward force substantially equal to the combined primary and secondary forces P and S which are equal to approximately 1.25 times the centrifugal force of the balance weights when driven at the same angular velocity as the crankshaft.

Fig. 4 shows the piston 3 at a mid position between top dead centre and bottom dead centre. Due to the eccentric drive mechanisms the balance weights are in a position such that their angular velocity is approximately equal to the angular velocity of the crankshaft and the resultant of the centripetal acceleration and the tangential acceleration are producing an upward resultant force (arrow R2 in the associated vector diagram) which has the effect of substantially equalling the magnitude of the downward acting secondary force S.

It can be seen that the magnitude of the tangential acceleration is small compared to the centripetal acceleration. In the diagram, R is the direction and magnitude of the centripetal acceleration and the tangential accleration is drawn at right angles to the centripetal acceleration. The resultant

10.  **0058475**

acceleration R1 is the acceleration image and R2 is the vertical resultant of the two R1 resultants.

Fig. 5 shows the piston S at bottom dead centre and the balance weights acting upwards. As a result of the eccentric drive mechanisms the balance weights are driven at approximately 0.88 times the crankshaft angular velocity so the upwards centrifugal force is reduced to approximately 0.75 of what it would be if the balance weights and crankshaft had the same angular velocity. This upwards centrifugal force substantially equals the combined primary and secondary forces P and S.

Fig. 6 shows the piston 3 at a mid position between top dead centre and bottom dead centre. The angular velocity of the balance weights and the crankshaft are approximately the same and the positions of the balance weights produce a resultant upward force R2 as in Fig. 4 which has the effect of substantially equalling the downward acting secondary force S.

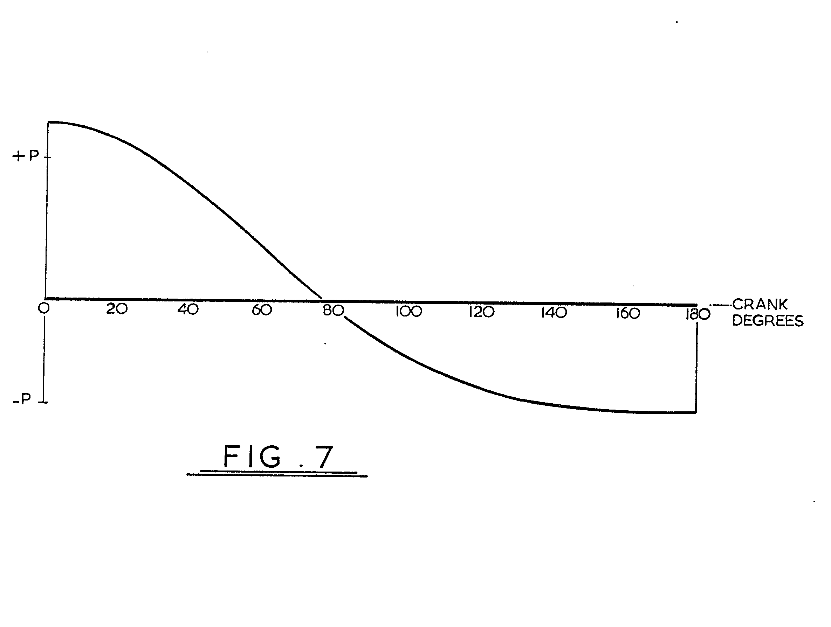

The effect of the present invention on the primary and secondary forces is most clearly seen by the graph of Fig. 7 which shows the combined effect of the centripetal acceleration and tangential acceleration which substantially equals the combined primary and secondary forces of a piston and connecting rod. The vertical axis represents the total balancing force and the horizontal axis represents the angular position of the crankshaft. It will be noted that at

O degrees (top dead centre) the balancing force is equal to plus 1.25P, at 90 degrees the balancing force is minus 0.25P (in the case considered 0.25P is approximately equal to S), and at 180 degrees the balancing force is equal to minus 0.75P (i.e. P-S). It will accordingly be appreciated that the up and down secondary forces have been substantially eliminated.

As already mentioned the balance weight shown in Fig. 2 is for a single cylinder engine but the present invention can be applied to an in-line twin cylinder engine with cranks at 360° just by increasing the weight of the balance weight providing of course the link bearings are of sufficient size to withstand the resultant loads. The loads on the link bearings due to the torque in increasing and decreasing the angular velocity of the balance weight are however low when compared to the magnitude of the secondary force acting.

The present invention can also be applied to a twin cylinder engine with cranks at 180 degrees as in a two stroke twin engine. In this case each illustrated balance weight is replaced by a pair of balance weights disposed at 180 degrees to each other, one of the pair of balance weights being driven by a shaft passing coaxially through the shaft of the other balance weight of the pair. The pair of balance weights are connected to the shafts by which they are driven by links disposed at 180 degrees to each other.

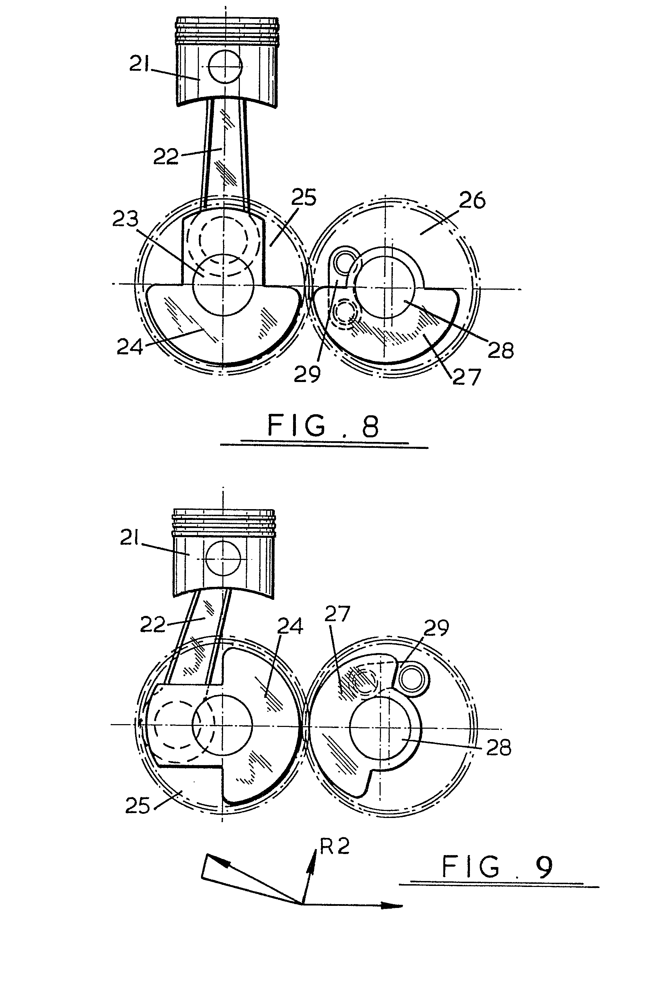

Referring now to Figs. 8 to 11, an embodiment of the present invention having a single balance weight will be described. These drawings show a piston 21, a connecting rod 22, a crankshaft 23 rigidly supporting a weight 24, a gear 25 driven by the crankshaft, a gear 26 meshing with the gear 25, and a balance weight 27 mounted on a shaft 28 and connected to the gear 26 by a link 29. The weight 24 is of the appropriate weight and shape to balance half the reciprocating mass of the piston 21 and connecting rod 22 plus the rotating mass of the crankpin and connecting rod big end. The single balance weight 27 is of the appropriate weight and shape to balance half the reciprocating mass of the piston and connecting rod when driven at the same angular velocity as the crankshaft.

When the piston is at top dead centre as shown in Fig. 8 the balance weight is driven at an angular velocity of approximately 1.25 times the crankshaft angular velocity giving a centrifugal force equal to 1.56 times what it would be at the crankshaft angular velocity. As the balance weight 27 corresponds to only half of the reciprocating mass however the total upward force is half of 1.56 plus the effect of the crank balance weight 24 which gives a total upward force of 1.28 times the primary force (P), which total upward force is approximately equal to the combined primary and secondary forces of 1.25P.

When the piston is in the mid way positions as shown in Fig. 9 and Fig. 11, it can be seen from the vector diagrams in these drawings that the crank weight 24 acts at right angles to the cylinder centreline but that the variable angular velocity balance weight 27 acts slightly upwards. Due to the tangential acceleration the acceleration image acts at a further angle upwards and the resultant R2 of this vector and the crank horizontal vector acts upwards at a slight angle off the cylinder centreline. R2 can be resolved into a force approximately equal to the secondary force to be balanced in line with the cylinder centreline and a force at right angles thereto. This latter force, however, is small and can be ignored.

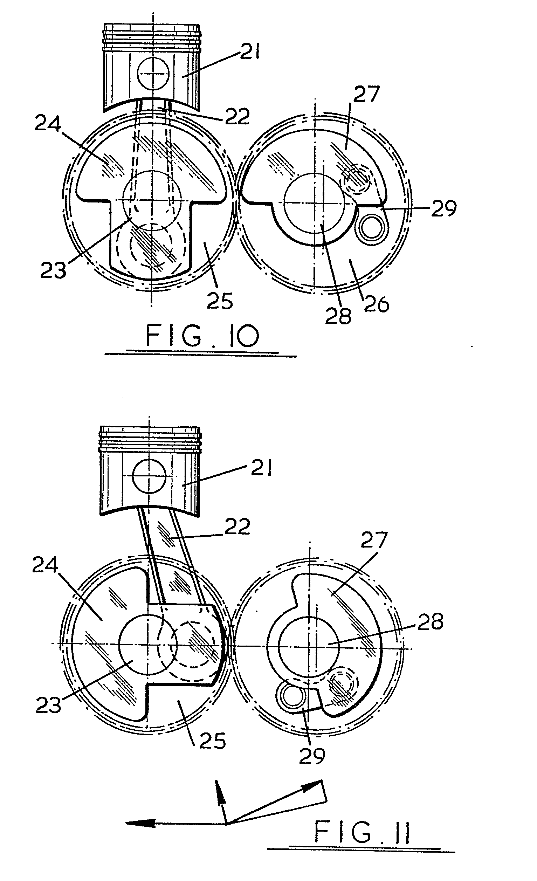

When the piston is at bottom dead centre as shown in Fig. 10 the variable speed balance weight is rotated at approximately 0.75 times the angular velocity of the crankshaft so the centrifugal force is reduced to 0.56P. This means that the total downward force due to the weights 24 and 27 is 0.78P, approximately equal to the primary force P acting downwards and the secondary force (0.25P) acting upwards.

It will be appreciated that the embodiment of Figs. 8 to 11 requires a greater variation in the angular velocity of the balance weight than is the case with the embodiment of Figs. 1 to 7.

In the illustrated embodiments the balance weights

14.

0058475

are shown spaced from the crankshaft by a distance
sufficient to prevent any overlap of their component
parts. The space required for the mechanism could
be reduced however by interleaving component parts and
moving the crankshaft and balance weight axes closer
together.

It will be appreciated that other arrangements
to those illustrated may also be provided. For example
the or each balance weight may be annular and supported
or bearings through which the crankshaft extends, the
balance weight being connected directly to the crankshaft
by a pivotal link. Constant and variable angular
velocity balance weights may also be used in
combination.

15.                                    0058475

CLAIMS

1.    A system for balancing primary and secondary forces resulting from the reciprocation of an element of a mechanism connected to a crankshaft, comprising at least one balance weight rotatable about a fixed axis and means for rotating said at least one balance weight about said fixed axis at an angular velocity related to the angular velocity of the crankshaft, characterised in that said rotating means is adapted to vary the angular velocity of said at least one balance weight relative to the angular velocity of the crankshaft during the course of each revolution of the crankshaft such that the centrifugal force generated by said at least one balance weight varies to substantially reduce or eliminate vibrations due to primary and secondary forces.

2.    A system according to claim 1, wherein said at least one balance weight is rotated by an eccentric drive mechanism which is itself driven from the crankshaft.

3.    A system according to claim 2, wherein said eccentric mechanism comprises a drive gear which is linked to said at least one balance weight, the rotational axes of the drive gear and said at least one balance weight being eccentric.

4.    A system according to claim 3, comprising a pivotal link interconnecting the drive gear and said at least one balance weight.

16. **0058475**

5. A system according to any preceding claim, comprising two identical balance weights rotatable in opposite directions about axes parallel to the crankshaft axis.

6. A system according to claim 5, wherein the crankshaft rigidly supports a weight sufficient to balance the rotating mass of the crankshaft and members rotating therewith, and the two balance weights have a combined weight sufficient to balance the reciprocating mass of the said element of the mechanism.

7. A system according to any one of claims 1 to 4, comprising a single balance weight rotatable in the opposite direction to the crankshaft about an axis parallel to the crankshaft axis.

8. A system according to claim 7, wherein the crankshaft rigidly supports a weight sufficient to balance the rotating mass of the crankshaft and members rotating therewith and to balance half the reciprocating mass of the said element of the mechanism, the said single weight having a weight sufficient to balance half the said reciprocating mass.

9. A method for balancing both primary and secondary forces resulting from the reciprocation of an element of a mechanism connected to a crankshaft, wherein at least one balance weight is rotated at an angular velocity related to the angular velocity of the crankshaft to provide a balancing centrifugal force, characterised in that the angular velocity of the said at least one balance weight is varied relative to the angular velocity of the crankshaft during the course of each revolution of the crankshaft to provide a centrifugal force the magnitude and direction of which varies to substantially reduce or eliminate vibrations due to primary and second

1/7

FIG.1

FIG. 2

FIG. 3

FIG. 4

FIG . 5

FIG . 6

5/7

FIG. 7

FIG . 8

FIG . 9

FIG. 10

FIG. 11

**European Patent Office**

**EUROPEAN SEARCH REPORT**

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| X | EP - A2 - 0 018 819 (J.H. HASLAM)<br>* claim 3 *<br>-- | 1 | F 16 F 15/26<br>G 01 M 1/36 |
| X | DE - B - 1 196 012 (X. FENDT & CO.)<br>* whole document *<br>-- | 1 | |
| Y | US - A - 3 415 237 (J.R. HARKNESS)<br>* claims *<br>-- | 1-3 | |
| Y | US - A - 3 203 274 (H. BARTH et al.)<br>* claims; column 3 *<br>-- | 1,5,7 | **TECHNICAL FIELDS SEARCHED (Int.Cl. ³)** |
| A | DE - A1 - 2 735 384 (S.A. AUTOMOBILES CITROEN)<br>* claims *<br>&   US - A - 4 174 698<br>-- | 1,8 | F 16 F 15/26<br>G 01 M 1/36 |
| A | DE - A1 - 2 829 042 (VOLKSWAGENWERK AG)<br>&   US - A - 4 290 319<br>---- | | |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | | |
|---|---|---|
| The present search report has been drawn up for all claims | | |
| Place of search<br>Berlin | Date of completion of the search<br>23-04-1982 | Examiner<br>KÖHN |

EPO Form 1503.1   06.78